Europäisches Patentamt

European Patent Office

Office européen des brevets

(11) Veröffentlichungsnummer: **0 226 000**

**B1**

# (12) EUROPÄISCHE PATENTSCHRIFT

(45) Veröffentlichungstag der Patentschrift: 25.04.90

(51) Int. Cl.⁵: **B 62 D 33/06**

(21) Anmeldenummer: **86114823.7**

(22) Anmeldetag: **24.10.86**

(54) Fahrerhaus für Lastkraftwagen.

(30) Priorität: **20.12.85 DE 3545502**

(43) Veröffentlichungstag der Anmeldung:
**24.06.87 Patentblatt 87/26**

(45) Bekanntmachung des Hinweises auf die
Patenterteilung:
**25.04.90 Patentblatt 90/17**

(84) Benannte Vertragsstaaten:
**AT DE FR GB IT NL SE**

(56) Entgegenhaltungen:
**DE-B-2 153 510**
**GB-A- 895 525**
**US-A-4 436 177**

(73) Patentinhaber: **MAN Nutzfahrzeuge**
**Aktiengesellschaft**
**Dachauer Strasse 667 Postfach 50 06 20**
**D-8000 München 50 (DE)**

(72) Erfinder: **Schmidt, Werner**
**Vogelloh 54**
**D-8000 München 50 (DE)**
Erfinder: **John, Herbert**
**Vogelloh 62**
**D-8000 München 50 (DE)**
Erfinder: **Watzek, Gerhard**
**Eduard-Spranger-Strasse 34**
**D-8000 München 45 (DE)**
Erfinder: **Schmiedel, Wolfgang**
**Hochstrasse 27**
**D-8061 Vierkirchen (DE)**

Courier Press, Leamington Spa, England.

EP 0 226 000 B1

## Beschreibung

Die Erfindung betrifft ein Fahrerhaus für Lastkraftwagen mit Staukasten.

Es sind Lastkraftwagen bekannt, die Ausnehmungen in der Karosserie aufweisen, in denen Staukästen von der Seite her einschiebbar sind. Hierbei ist es notwendig, daß die Ausnehmungen erheblich versickt oder anderweitig verstärkt werden, was beträchtliche Werkzeugkosten mit sich bringt. Wesentlicher jedoch ist der Umstand, das der in Anspruch genommene Raum ein und allemal für das Einbringen von Staukästen festgelegt ist.

Der Erfindung liegt die Aufgabe zugrunde, dem Fahrerhaus auf einfache Weise Staukästen oder im Austausch beliebig andere Gerätschaften zuzuordnen.

Dies wird erfindungsgemäß dadurch erreicht, daß die Seitenwandkarosserie auf beiden Seiten in ihrem hinteren, unteren Bereich eine Aussparung aufweist, in der, von unten einbaubar vorzugsweise Staukästen oder auch andere Gerätschaften wie Tanks, Gasflaschen, Zusatzleitungen etc., anbringbar sind. Der gravierende Vorteil gegenüber herkömmlichen Konstruktionen liegt in der Vielseitigkeit der erfinderischen Lösung, d. h., es können im Raum der Aussparung als Vorzugsvariante problemlos Staukästen, aber auch jede andere Art von Gerätschaften eingebracht werden, wodurch man sehr individuelle unterschiedliche Kundenwünsche ohne nachträglichen Eingriff in die Karosseriegestalt erfüllen kann. Außerdem bringt die einfachere Gestaltung der Seitenwandkarosserie noch Materialeinsparung und Werkzeugkostenreduzierung mit sich. Nach einem weiteren Merkmal der Erfindung weisen die Staukästen schwenkbare Deckel auf, die als formgerechte Weiterbildung des Seitenwand-Erscheinungsbildes ausgeführt sind. Solcherart ist einmal ein leichter Zugang zum Staukasteninnenraum geschaffen und zum anderen ein geschlossenes Aussehen der Karosserie gewahrt. Wenn andere Gerätschaften als die Staukästen eingebaut werden, wird entweder der Deckel des Staukastens oder ein entsprechendes Surrogat als Karosseriekomplettierung hergenommen. Nach einer vorteilhaften Ausgestaltung der Erfindung weisen die Deckel einen U-förmigen Rand auf, in dem eine Dichtung aus Gummi oder verformbaren Kunststoff einliegt, wobei im geschlossenem Zustand des Deckels umlaufende Stege als Verlängerung der Kastenwände in die Dichtung eingreifen. Solcherart wird auf einfache Weise ein auch gegen Spritzwasser abgedichteter Raum der Staukästen erzielt.

Nach einem weiteren Ausgestaltung der Erfindung weisen die Staukästen innenseitig der Deckel eine schwenkbare Stange auf, die im ausgeschwenkten Zustand in Anlage an eine Rippe des Deckels diesen in Offenstellung hält. Es ist auf diese Weise sehr leicht, die schwenkbare Stange aus ihrem Schnapper herauszuziehen und mit ihrem Kopfende gegen eine Rippe des Deckels zu legen, wodurch ein willkürliches Zuschlagen des Deckels verhindert wird.

Weitere Merkmale und Vorteile der Erfindung sind den Ansprüchen, der Beschreibung und den Zeichnungen zu entnehmen.

Die Erfindung wird in einem Ausführungsbeispiel dargestellt.

Es zeigen:

Fig. 1 die Seitenansicht eines Fahrerhauses

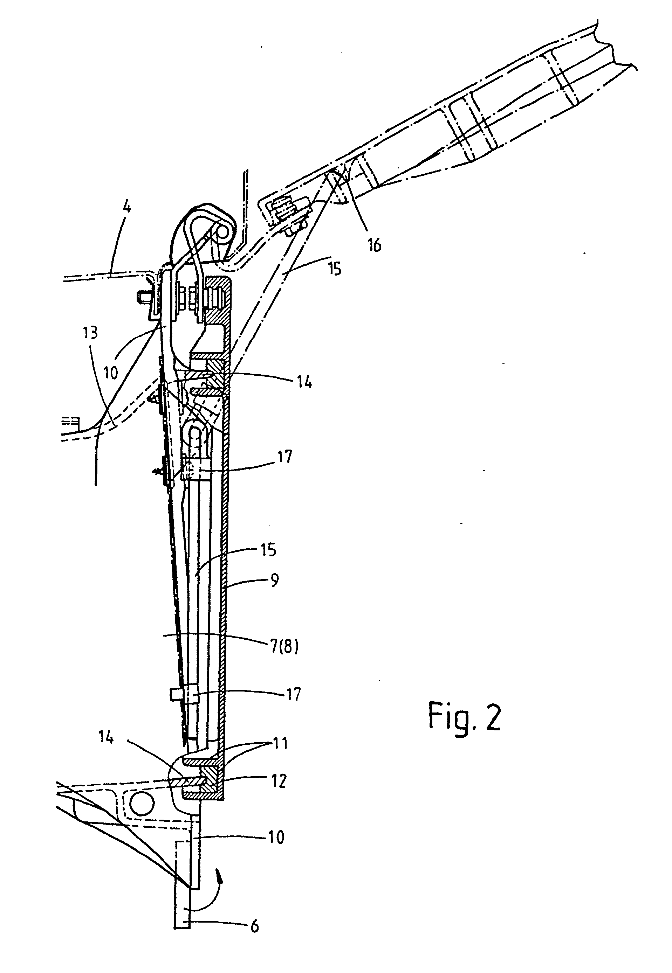

Fig. 2 Vorderansicht und Teilschnitt eines Staukastens mit Deckel und Anbringung am Fahrerhaus.

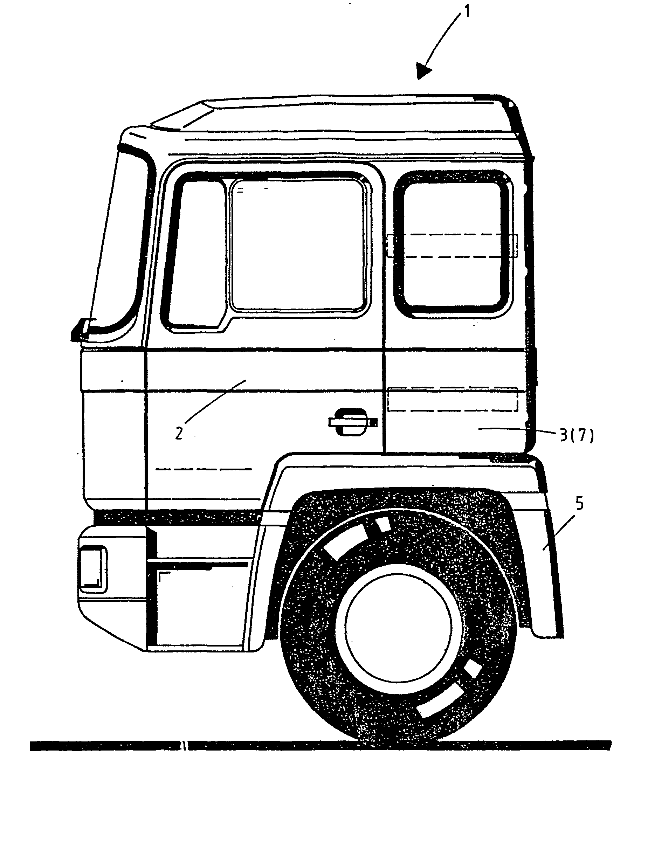

Fig. 1 zeigt das Fahrerhaus 1 mit der Seitenwandkarosserie 2. In der im hinteren, unteren Bereich befindlichen Aussparung 3 ist der Staukasten 7 angeordnet, der über seine Ränder 10 mit dem Rahmen 4 der Seitenwandkarosserie 2 und dem Rahmen 6 des Kotflügels 5 mittels entsprechender Befestigungselemente verbunden ist. Selbstverständlich können statt der Staukästen 7 auch andere Gerätschaften 8, wie z.B. Tank, Gasflaschen, Zuleitungen etc. angebracht werden. Die Staukastenseitenwände 13 sind in ihrer Verlängerung über den Rand 10 als Stege 14 weitergeführt, die in eine mit einer Dichtung 12 ausgestattete Mulde 11 des Deckels 9 eingreifen. Der Staukasten 7 weist innenseitig des Deckels 9 eine schwenkbare Stange 15 auf, die in Klemmen 17 gehalten ist und bei Offenstellung des Deckels aus den Klemmen herausgezogen und nach Ausschwenken gegen die Rippe 16 des Deckels arretiert werden kann.

Bezugzeichenliste

1 Fahrerhaus
2 Seitenwandkarosserie von 1
3 Aussparung in 2
4 Rahmen von 2
5 Kotflügel
6 Rahmen von 5
7 Staukasten
8 andere Gerätschaften
9 schwenkbarer Deckel
10 Rand an 7
11 U-förmige Mulde an 9
12 Dichtung
13 Staukastenseitenwände
14 Stege an 13
15 schwenkbare Stange
16 Rippe an 9
17 Klemmen

## Patentansprüche

1. Fahrerhaus für Lastkraftwagen mit Stauraum, dadurch gekennzeichnet, daß die Seitenwandkarosserie (2) auf beiden Seiten in ihrem hinteren, unteren Bereich eine Aussparung (3) aufweist, in der, von unten einbaubar, vorzugsweise Staukästen (7) oder aber auch andere Gerätschaften (8) wie Tanks, Gasflaschen, Zusatzleitungen oder dergleichen anbringbar sind.

2. Fahrerhaus nach Anspruch 1, dadurch gekennzeichnet, daß die in der Aussparung (3) anbringbaren Teile ohne Veränderung der Seitenwandkarosserie (2) auswechselbar sind.

3. Fahrerhaus nach den Ansprüchen 1 oder 2, dadurch gekennzeichnet, daß die Staukästen (3) schwenkbare Deckel (9) aufweisen.

4. Fahrerhaus nach den Ansprüchen 1 bis 3, dadurch gekennzeichnet, daß die Deckel (9) als formgerechte Weiterbildung des Seitenwand-Erscheinungsbildes der Karosserie (2) ausgeführt sind.

5. Fahrerhaus nach einem oder mehreren des Ansprüche 1 bis 4, dadurch gekennzeichnet, daß die Staukästen (3) einen Rand (10) zur Befestigung an dem Karosserierahmen (4) und dem Kotflügelrahmen (6) aufweisen.

6. Fahrerhaus nach einem oder mehreren der Ansprüche 1 bis 5, dadurch gekennzeichnet, daß die Staukästen (3) sich von der Öffnung nach hinten verjüngen.

7. Fahrerhaus nach einem oder mehreren der Ansprüche 1 bis 6, dadurch gekennzeichnet, daß die Staukästen (3) als Spritzgußteile aus Kunststoff ausgebildet sind.

8. Fahrerhaus nach einem oder mehreren der Ansprüche 1 bis 7, dadurch gekennzeichnet, daß die Deckel (9) eine U-förmige Mulde (11) aufweisen, in der eine Dichtung (12) aus Gummi oder verformbarem Kunststoff einliegt, wobei im geschlossenen Zustand des Deckels (9) umlaufende Stege (14) als Verlängerung der Kastenwände (13) in die Dichtung (12) eingreifen.

9. Fahrerhaus nach einem oder mehreren der Ansprüche 1 bis 8, dadurch gekennzeichnet, daß die Staukästen (7) innenseitig der Deckel (9) eine schwenkbare Stange (15) aufweisen, die im ausgeschwenkten Zustand in Anlage an eine Rippe (16) des Deckels diesen in Offenstellung halten.

## Revendications

1. Cabine de camion comportant un volume de rangement, caractérisée en ce que la paroi latérale de la carrosserie (2) comporte des deux côtés, dans sa zone arrière inférieure, une cavité (3) qui peut recevoir par en-dessous, de préférence des caissons de rangement (7) ou mais encore d'autres dispositifs (8) tels que réservoirs, bouteilles de gaz, conduites de réserve.

2. Cabine selon la revendication 1, caractérisée en ce que les parties susceptibles d'être mises dans la cavité (3) sont interchangeables sans modifier la paroi latérale de la carrosserie (2).

3. Cabine selon les revendications 1 ou 2, caractérisée en ce que les caissons de rangement (3) comportent des couvercles pivotants (9).

4. Cabine selon les revendications 1 à 3, caractérisée en ce que les courvercles constituent des développements de la forme de l'aspect de la paroi latérale de la carrosserie (2).

5. Cabine selon l'une ou plusieurs des revendications 1 à 4, caractérisée en ce que les caissons de rangement (3) comportent un bord (10) pour la fixation sur le cadre de la carrosserie (4) et le cadre (6) du garde-boue.

6. Cabine selon l'une ou plusieurs des revendications 1 à 5, caractérisée en ce que les caissons de rangement (3) vont en se rétrécissant à partir de l'ouverture.

7. Cabine selon l'une ou plusieurs des revendications 1 à 6, caractérisée en ce que les caissons (3) sont réalisés en matière synthétique sous la forme de pièces injectées.

8. Cabine selon l'une ou plusieurs des revendications 1 à 7, caractérisée en ce que les couvercles (9) comportent une gorge (11) en forme de U recevant un joint (12) en caoutchouc ou en matière synthétique déformable, et lorsque le courvercle (9) est à l'état fermé, les entretoises (14), prolongeant les parois (13) du caisson viennent prendre dans le joint (12).

9. Cabine selon l'une ou plusieurs des revendications 1 à 8, caractérisée en ce que les caissons de rangement (7) comportent sur le côté intérieur du couvercle (9), une barre pivotante (15) qui, à l'état déployé, vient en appui contre une nervure (16) du couvercle pour maintenir celui-ci en position d'ouverture.

## Claims

1. A driver's cab for motor lorries with a storage space, characterized in that the side wall bodywork (2) is provided on both sides in its lower, rear area with a recess (3) in which preferably storage containers (7) and also other equipment (8) such as tanks, gas cylinders, supplementary lines or the like can be arranged, inserted from below.

2. A driver's cab according to claim 1, characterized in that the parts which can be arranged in the recess (3) can be interchanged without altering the side wall bodywork (2).

3. A driver's cab according to claim 1 or 2, characterized in that the storage containers (3) have pivotable lids (9).

4. A driver's cab according to claims 1 to 3, characterized in that the lids (9) are constructed visually as fully-fashioned continuations of the side wall of the bodywork (2).

5. A driver's cab according to one or more of claims 1 to 4, characterized in that the storage containers (3) have an edge (10) for fastening to the bodywork frame (4) and the mudguard frame (6).

6. A driver's cab according to one or more of claims 1 to 5, characterized in that the storage containers (3) taper inwardly from the opening towards the rear.

7. A driver's cab according to one or more of claims 1 to 6, characterized in that the storage containers (3) are constructed as injection-moulded parts from plastics material.

8. A driver's cab according to one or more of claims 1 to 7, characterized in that the lids (9) have a U-shaped hollow (11), in which a seal (12) of rubber or deformable plastics material is inserted, continuous webs (14) engaging in the seal (12) as extensions of the container walls (13) in the closed state of the cover (9).

9. A driver's cab according to one or more of claims 1 to 8, characterized in that the storage containers (7) are provided on the inside of the lids (9) with a pivotable rod (15) which holds the lid in the open position in the swung-out state resting against a rib (16) of the said cover.

Fig. 2